# EUROPEAN PATENT SPECIFICATION

(11) **EP 4 053 696 B1**
(45) Date of publication and mention of the grant of the patent: **07.10.2026**
(21) Application number: 19955095.5
(22) Date of filing: 31.12.2019
(51) Int. Cl.: G06F 9/445, G06F 9/48

(54) **INFORMATION PROCESSING METHOD, DEVICE, AND COMPUTER STORAGE MEDIUM**
INFORMATIONSVERARBEITUNGSVERFAHREN, VORRICHTUNG UND COMPUTERSPEICHERMEDIUM
PROCÉDÉ DE TRAITEMENT D'INFORMATIONS, DISPOSITIF, ET SUPPORT DE STOCKAGE INFORMATIQUE

(30) Priority: 04.12.2019 CN 201911226384
(43) Date of publication of application: 07.09.2022
(73) Proprietor: Shanghai Qwik Smart Technology Co., Ltd., Shanghai 200030 (CN)
(72) Inventor: SHI, Hongren, Shanghai 201821 (CN)
(74) Representative: Ramrath, Lukas
(86) International application number: PCT/CN2019/130651
(87) International publication number: WO 2021/109309

(56) References cited:
- CN-A- 103 473 355
- CN-A- 109 151 012
- CN-A- 109 167 872
- CN-A- 110 046 015
- CN-A- 110 086 877
- KR-A- 20120 009 843
- US-A1- 2014 106 726
- US-A1- 2015 224 876
- US-A1- 2015 334 165
- US-A1- 2017 026 421
- LIU YI ET AL: "A First Look at Instant Service Consumption with Quick Apps on Mobile Devices", 2019 IEEE INTERNATIONAL CONFERENCE ON WEB SERVICES (ICWS), IEEE, 8 July 2019 (2019-07-08), pages 328 - 335, XP033608314, [retrieved on 20190827], DOI: 10.1109/ICWS.2019.00061

## Description

### TECHNICAL FIELD

This disclosure relates to the field of information processing, and in particular to methods for information processing, a device, and a computer storage medium.

### BACKGROUND

Traditionally, content synchronization of an application across different terminals generally requires that the same application has been installed on respective terminals. If the application has been installed on one terminal but not on another terminal, the content synchronization of the application cannot be realized between the two terminals. At this point, it often requires a user to manually download the application on another terminal before synchronization, which is a tedious operation. In addition, even after the same application is installed, the content synchronization between the two terminals is often achieved manually, which is not intelligent enough.

US2014106726A1 discloses that a system and method for monitoring apps in a vehicle to reduce driver distraction is disclosed. A controller operating inside or in combination with the head unit of the vehicle may monitor operation of the vehicle, and generate alerts indicative of operation of the vehicle (such as an alert indicative that the vehicle is operating at a predetermined speed). In response to the alert, the operation of the app in the vehicle may be modified.

US2015224876A1 discloses that an on-vehicle system 100 according to an embodiment of the present invention causes a mobile terminal device 40 and an on-vehicle device 50 to work together, and allocates and displays two pieces of application software information about a widget from the mobile terminal device 40 on two display areas of gadget displays 61V and 62V connected to the on-vehicle device 50. Also, the allocation of the application software information is conducted via a touch panel 3 on the mobile terminal device 40 provided with a display device 6 for displaying a widget setting screen.

US2017026421A1 discloses that an electronic device is provided. The electronic device includes a memory having a first memory area for storing an instruction that provides a normal operating mode and a second memory area for storing an instruction that provides a secure operating mode, and a processor configured to implement a secure mode management module that is configured to receive configuration information associated with the secure operating mode from at least one external electronic device and to store at least one function corresponding to the configuration information in the second memory area.

### SUMMARY

Implementations of the disclosure provide a method for information processing, a device, and a computer storage medium, to achieve automatic synchronization of installation-free applications between an in-vehicle electronic device and an electronic device, which is more convenient and intelligent.

The summary is provided to introduce concepts of the disclosure in a simplified form, which will be further described in the following detailed description. The summary does not intend to identify key features or essential features of the present disclosure, nor does it intend to limit the scope of the present disclosure.

### BRIEF DESCRIPTION OF THE DRAWINGS

The foregoing and other objects, features, and advantages of the present disclosure will become more apparent through a more detailed description of exemplary implementations of the present disclosure in conjunction with the accompanying drawings. In the exemplary implementations of the present disclosure, the same reference numerals generally represent the same components.
FIG. 1 is a schematic diagram illustrating an example information processing environment 100 according to implementations of the disclosure.
FIG. 2 is a schematic flow chart illustrating a method 200 for information processing according to implementations of the disclosure.
FIG. 3 is a schematic flow chart illustrating a method 300 for information processing according to implementations of the disclosure.
FIG. 4 is a schematic flow chart illustrating a method 400 for information processing according to implementations of the disclosure.
FIG. 5 is a schematic flow chart illustrating a method 500 for information processing according to implementations of the disclosure.
FIG. 6 is a schematic block diagram illustrating an example device 600 which can be used to implement the disclosure.

In various figures, the same or corresponding numerals represent the same or corresponding parts.

### DETAILED DESCRIPTION

Various implementations of the present disclosure will be described in more details with reference to the drawings. Although the drawings illustrate the implementations of the present disclosure, it should be appreciated that the present disclosure can be implemented in various manners and should not be limited to the implementations explained herein. On the contrary, the implementations are provided to make the present disclosure more thorough and complete and to fully convey the scope of the present disclosure to those skilled in the art.

As used herein, the term "include" and its variants are to be read as open-ended terms that mean "include, but is not limited to." The term "or" is to be read as "and/or" unless the context clearly indicates otherwise. The term "based on" is to be read as "at least based on in part." The terms "one example implementation" and "one implementation" are to be read as "at least one example implementation." The term "a further implementation" is to be read as "at least a further implementation." The terms "first", "second" and so on can refer to same or different objects. The following text also can include other explicit and implicit definitions.

Traditionally, content synchronization of an application across different terminals generally requires that the same application has been installed on respective terminals. If the application has been installed on one terminal but not on another terminal, the content synchronization of the application cannot be realized between the two terminals. At this point, it often requires a user to manually download the application on another terminal before synchronization, which is a tedious operation. In addition, even after the same application is installed, the content synchronization between the two terminals is often achieved manually, which is not intelligent enough.

To solve at least in part the foregoing problem and one or more of other potential problems, installation-free applications, such as quick applications, which require no installation and have the feature of tap-to-use, may be used for content synchronization of applications across different terminals. Therefore, implementations of the disclosure provide a scheme for information processing. In this scheme, configuration information of at least one installation-free application is received at an in-vehicle electronic device from an electronic device which is associated with the in-vehicle electronic device. Information of a launch page of the at least one installation-free application is obtained based on the configuration information of the at least one installation-free application. The at least one installation-free application is launched based on the information of the launch page.

In this way, automatic synchronization of the installation-free application between the in-vehicle electronic device and the electronic device can be achieved, which is more convenient and intelligent.

In the following, specific examples of the scheme will be described in greater detail in conjunction with the figures.

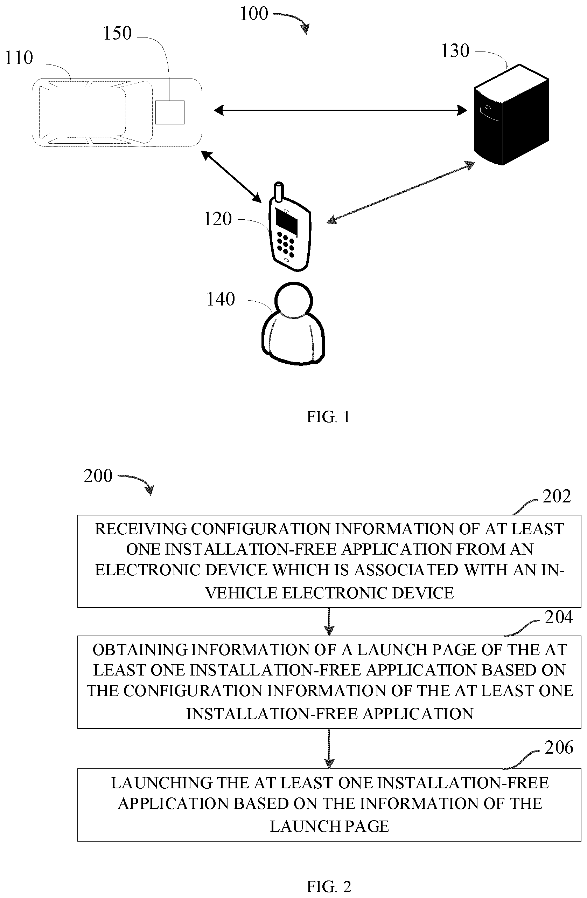

FIG. 1 is a schematic diagram illustrating an example information processing environment 100 according to implementations of the disclosure. The information processing environment 100 involves a vehicle 110, an electronic device 120, a server 130, and a user 140.

The vehicle 110 at least includes an in-vehicle electronic device 150 and a communication module.

The in-vehicle electronic device 150 may be, but not limited to, an in-vehicle computer, an in-vehicle controller, and so on. The in-vehicle electronic device 150 includes at least a processor and a memory. The memory is configured to store one or more computer programs. The processor is coupled with the memory and is configured to execute the one or more computer programs to cause the in-vehicle electronic device to achieve one or more functions. In some implementations, the in-vehicle electronic device 150 is implemented with an installation-free application engine, such as quick application engine, which is configured to run an installation-free application. In some implementations, the in-vehicle electronic device 150 may further include or be coupled with an in-vehicle display, to allow display of related interfaces, such as a page of the installation-free application.

The communication module, such as a telematics BOX (T-BOX), may communicate with at least one of the electronic device 120 or the server 130. In some implementations, the communication module may include a direct communication module, which is in a direct communication connection with the electronic device 120. According to the invention, the direct communication module communicates with the electronic device 120 via any direct communication technology, such as Bluetooth, wireless fidelity (Wi-Fi), Zigbee, near field communication (NFC), and universal serial bus (USB). In some implementations, the in-vehicle electronic device 150 may receive a vehicle control instruction from the electronic device 120 via the direct communication module. For example, the in-vehicle electronic device 150 may receive an unlock instruction for a virtual Bluetooth key from the electronic device 120 via a Bluetooth module, so as to unlock the vehicle.

Alternatively or additionally, the communication module may include a cellular communication module, which is configured to communicate with at least one of the electronic device 120 or the server 130 via a cellular network. For example, the cellular communication module may communicate with at least one of the electronic device 120 or the server 130 via any cellular communication technology, such as 5^{th} generation (5G), long term evolution (LTE), EVDO, code division multiple access (CDMA), general packet radio service (GPRS), and enhanced data rate for GSM evolution (EDGE). For example, the in-vehicle electronic device 150 may send a request for downloading an installation-free application to the server 130 and download an application package of the installation-free application from the server 130 via the cellular communication module.

In some implementations, the electronic device 120 may have wireless transmitting and receiving capabilities and may have access to the Internet. The electronic device 120 may be, for example, but not limited to, a mobile phone, a smart phone, a laptop computer, a tablet computer, a personal digital assistant (PDA), a wearable device, and the like.

In some implementations, the electronic device 120 may include at least a communication module, a memory, and a processor. The communication module is configured to communicate with at least one of the vehicle 110 or the server 130. The communication module is similar to the communication module in the vehicle 110, which will not be further described. In some implementations, the electronic device 120 may send configuration information of the installation-free application to the in-vehicle electronic device 150 directly or via the server 130. For example, the electronic device 120 may send the configuration information of the installation-free application to the in-vehicle electronic device 150 via Bluetooth, or the electronic device 120 may send the configuration information of the installation-free application to the in-vehicle electronic device 150 through the server 130 via the cellular network. The memory is configured to store one or more computer programs. The processor is coupled with the memory and is configured to execute the one or more computer programs to cause the electronic device 120 to achieve one or more functions.

The server 130 is capable of communicating with at least one of the vehicle 110 or the electronic device 120. The server 130 may include, but not limited to, a personal computer, a server computer, a multi-processor system, a mainframe computer, a distributed computing environment including any of the aforementioned systems or devices, and the like. In some implementations, the server 130 may have one or more processing units, including dedicated processing units such as graphics processing units (GPUs), field-programmable gate arrays (FPGAs), and application specific integrated circuits (ASICs), and general-purpose processing units such as central processing units (CPUs). In addition, one or more virtual machines may also be running on the server 130.

In some implementations, a platform for managing installation-free applications may be implemented in the server 130. For example, an installation-free application store platform may be implemented in the server 130. In some implementations, the server 130 may be a part of the platform for managing installation-free applications. For example, the server 130 may send an application package of an installation-free application to the in-vehicle electronic device 150 or the electronic device 120 based on a request for downloading the installation-free application from the in-vehicle electronic device 150 or the electronic device 120. For another example, the server 130 may send related codes and resources of a page of an installation-free application to the in-vehicle electronic device 150 or the electronic device 120 based on a request for page jumping of the installation-free application from the in-vehicle electronic device 150 or the electronic device 120.

In the following, operations performed by the in-vehicle electronic device 150 will be described in detail in conjunction with FIG.2.

FIG. 2 is a schematic flow chart illustrating a method 200 for information processing according to implementations of the disclosure. For example, the method 200 may be performed by the in-vehicle electronic device 150 as shown in FIG. 1. It should be noted that the method 200 may further include additional blocks not shown and/or may omit blocks shown, and the disclosure is not limited thereto.

At block 202, configuration information of at least one installation-free application is received at the in-vehicle electronic device 150 from the electronic device 120 which is associated with the in-vehicle electronic device 150. For example, the installation-free application may include a quick application, and the configuration information may include a jump address (which may also be referred to as a link address), an icon, an application package name, an application name, a version number, a minimum platform version number, an application profile of the quick application and so on. It should be noted that the installation-free application may also be other types of installation-free applications, such as an applet, a progressive web application (PWA), and the like. For example, the at least one installation-free application may include a predetermined type of at least one installation-free application. For example, the predetermined type may include entertainment, information, instant messaging, and the like.

At block 204, information of a launch page of the at least one installation-free application is obtained based on the configuration information of the at least one installation-free application.

At block 206, the at least one installation-free application is launched based on the information of the launch page.

According to the invention, the configuration information of the at least one installation-free application includes a jump address of the at least one installation-free application. The information of the launch page of the at least one installation-free application may be obtained as follows. An application package of the at least one installation-free application is downloaded from the server based on the jump address of the at least one installation-free application. Then the information of the launch page of the at least one installation-free application is extracted from the application package of the at least one installation-free application. As an example, there may be one installation-free application, and the jump address of the installation-free application may be pateofastapp://com.pateo.music. Based on the jump address of the installation-free application, the application package such as an rpk package of the installation-free application may be downloaded. The application package may then be decompressed and verified so as to obtain the information of the launch page of the installation-free application, such as profiles, resources, and codes. Based on the information of the launch page, such as profiles, resources, and codes, the installation-free application engine in the in-vehicle electronic device 150 may then launch the installation-free application. For example, the installation-free application engine may render and present a page of the installation-free application, such as a home page. As another example, there may be multiple installation-free applications, such as two installation-free applications, and jump addresses of installation-free application A and B may be pateofastapp://com.pateo.a and pateofastapp://com.pateo.b respectively. Based on these two jump addresses, application packages of installation-free application A and B may be downloaded, from which information of launch pages of installation-free application A and B may be obtained. Installation-free application A and B may then be launched in a manner which is similar to that described above and will not be repeated herein.

Alternatively or additionally, in some implementations, the configuration information of the at least one installation-free application may include an application package of the at least one installation-free application. The information of the launch page of the at least one installation-free application may be extracted based on the application package of the at least one installation-free application. Subsequently, the at least one installation-free application may be launched based on the information of the launch page of the at least one installation-free application. As an example, there may be one installation-free application, and the application package of the at least one installation-free application may be an rpk package. The rpk package may be decompressed and verified so as to obtain the information of the launch page of the at least one installation-free application, such as profiles, resources, and codes. Based on the information of the launch page, such as profiles, resources, and codes, the installation-free application engine in the in-vehicle electronic device 150 may then launch the installation-free application. For example, the installation-free application engine may render and present a page of the installation-free application, such as a home page. As another example, there may be multiple installation-free applications, such as two installation-free applications. Application packages of installation-free applications A and B may be rpk package a and rpk package b respectively. Based on these two application packages, installation-free applications A and B may be launched. The launch process is similar to the above and will not be repeated herein. By delivering the application package of the installation-free application, the in-vehicle electronic device 150 may avoid downloading the application package of the installation-free application from the remote server 130, which saves traffic and time required for synchronization of the installation-free application and improves user satisfaction.

Alternatively or additionally, in some implementations, the configuration information of the at least one installation-free application includes a profile of the at least one installation-free application. The information of the launch page of the at least one installation-free application may be obtained as follows. A package name of the at least one installation-free application may be extracted from the profile of the at least one installation-free application. A jump address of the at least one installation-free application may be obtained based on the package name of the at least one installation-free application. An application package of the at least one installation-free application may be downloaded from the server based on the jump address of the at least one installation-free application. At last, the information of the launch page of the at least one installation-free application may be extracted from the application package of the at least one installation-free application. As an example, there may be one installation-free application, and the profile of the installation-free application, such as a manifesto file, may include a package name of the installation-free application. Based on the package name of the installation-free application, a jump address of the installation-free application may be obtained from the server 130 or may be constructed. The process after downloading the application package is similar to the above, which will not be repeated herein.

Alternatively or additionally, in some implementations, the configuration information of the at least one installation-free application may include a package name of the at least one installation-free application. The information of the launch page of the at least one installation-free application may be obtained as follows. A jump address of the at least one installation-free application may be obtained based on the package name of the at least one installation-free application. An application package of the at least one installation-free application may be downloaded from the server based on the jump address of the at least one installation-free application. At last, the information of the launch page of the at least one installation-free application may be extracted from the application package of the at least one installation-free application. The process after downloading the application package is similar to the above, which will not be repeated herein.

As such, automatic synchronization of the installation-free application between the in-vehicle electronic device 150 and the electronic device 120 can be achieved, which is more convenient and intelligent.

Alternatively or additionally, in some implementations, the configuration information of the at least one installation-free application may include an icon of the at least one installation-free application. To launch the at least one installation-free application, the icon of the at least one installation-free application may be generated at a desktop of an operating system of the in-vehicle electronic device 150. As such, the icon of the at least one installation-free application may be generated at the desktop of the in-vehicle electronic device 150 to facilitate a user to find the entry of the installation-free application later.

In some implementations, the at least one installation-free application may be launched as follows. For each installation-free application, whether the configuration information of the installation-free application satisfies a launch condition at the in-vehicle electronic device 150 is determined. Based on a determination that the configuration information of the installation-free application does not satisfy the launch condition at the in-vehicle electronic device 150, a first image processing is performed on the generated icon of the installation-free application so as to indicate that the installation-free application cannot be launched. For example, the configuration information of the installation-free application may include a minimum platform version number. Whether the configuration information of the installation-free application satisfies the launch condition at the in-vehicle electronic device 150 may be determined by determining whether the minimum platform version number of the installation-free application satisfies a platform version number of the installation-free application in the in-vehicle electronic device 150. For example, the first image processing may be graying. As such, the image processing is performed on an icon of an installation-free application, so as to indicate that the installation-free application is unable to be launched. In this way, the user may visually understand that the synchronous installation-free application is unable to be launched, which improves user experience.

Alternatively or additionally, the at least one installation-free application may be launched as follows. Based on a determination that the configuration information satisfies the launch condition, a second image processing is performed on the generated icon of the installation-free application, so as to indicate that the installation-free application is able to be launched. For example, the second image processing may be highlighting. As such, the image processing may be performed on an icon of an installation-free application, so as to indicate that the installation-free application is able to be launched. The user may visually understand that the synchronous installation-free application is able to be launched, which improves user experience.

It should be noted that the minimum platform version number, graying, and highlighting above-described are only examples, and they can be implemented in other manners, which are not limited in the disclosure.

Alternatively or additionally, the configuration information of the at least one installation-free application may include a jump address of a current page of the at least one installation-free application. The at least one installation-free application may be launched as follows. The current page of the at least one installation-free application is launched based on the jump address of the current page of the at least one installation-free application. The current page of the installation-free application may be launched as follows. Codes and resources of the current page are downloaded based on the jump address of the current page, and the current page is rendered and presented based on the codes and the resources. Alternatively or additionally, in some implementations, the configuration information of the at least one installation-free application may include a web cache (or snapshot) of a current page of the at least one installation-free application. The at least one installation-free application may be launched as follows. The current page of the at least one installation-free application is launched based on the web cache of the current page of the at least one installation-free application. For example, by pre-rendering the current page, the web cache may be generated. The web cache can be considered as an intermediate form of rendering. In one implementation, to launch the current page of the installation-free information, the web cache of the current page is parsed and the current page is rendered and presented based on the parsing result. As such, the current page of the installation-free application may be synchronized from the electronic device to the in-vehicle electronic device 150, which achieves content synchronization of the installation-free application between the electronic device 120 and the in-vehicle electronic device 150. Moreover, by synchronizing the web cache of the current page, page code operation such as code operation at the in-vehicle electronic device 150 may be avoided, which speeds up page synchronization and presentation.

Alternatively or in additional to the jump address and the web cache, in some implementations, the information of the current page of the at least one installation-free application may further include running status of the current page of the at least one installation-free application. The current page of the at least one installation-free application may be launched based on the running status of the current page of the at least one installation-free application. In some implementations, running status of a current page of a certain installation-free application is "presented in the foreground", and therefore the current page of the installation-free application is presented in the foreground. Alternatively or additionally, in some implementations, running status of current pages of one or more installation-free applications is "non background running", and therefore the current pages of the one or more installation-free applications are switched to the background and stop running. Alternatively or additionally, in some implementations, running status of current pages of one or more installation-free applications are "background running", and therefore the current pages of the one or more installation-free applications are switched to the background and keep running.

Alternatively or additionally, in some implementations, the method 200 may further include the following. Account information of the at least one installation-free application is received from the electronic device 120. Based on the account information of the at least one installation-free application, log into the at least one installation-free application. By delivering the account information of the installation-free application, the in-vehicle electronic device 150 is able to use the same account as the electronic device to log into the same installation-free application, such that the application account can be synchronized between the in-vehicle electronic device 150 and the electronic device120.

In some implementations, the account information of the at least one installation-free application may be received from the electronic device 120 via a direct communication connection between the in-vehicle electronic device 150 and the electronic device120. For example, the direct communication connection may include a short distance wireless communication connection and a wired communication connection. The short distance wireless communication connection may include, for example, a Bluetooth communication connection, a Wi-Fi communication connection, a zigbee communication connection, an NFC connection, and so on. The wired communication connection may include, for example, a USB connection. In some implementations, the Bluetooth communication connection may include a virtual Bluetooth key-based encrypted communication connection. As such, it can be ensured that the account information of the application is synchronized from the electronic device 120 having a virtual Bluetooth key of the vehicle, and the security of the account information of the installation-free application synchronized between the electronic device 120 and the in-vehicle electronic device 150 can be guaranteed.

In some implementations, the method 200 may further include the following. Whether a communication connection between the in-vehicle electronic device 150 and the electronic device 120 is disconnected is determined. Based on a determination that the communication connection between the in-vehicle electronic device 150 and the electronic device 120 is disconnected, log out a current account of the at least one installation-free application. As such, the application may be logged out in time after the communication connection between the in-vehicle electronic device 150 and the electronic device 120 is disconnected, which avoids account information leakage and achieves temporary log-in of the account of the installation-free application at the in-vehicle electronic device 150.

Alternatively or additionally, in some implementations, logging out the current account of the at least one installation-free application may include the following. Whether the communication connection is a virtual Bluetooth key-based encrypted communication connection is determined. Based on a determination that the communication connection is not the virtual Bluetooth key-based encrypted communication connection, log out the current account of the at least one installation-free application. As such, the in-vehicle electronic device 150 performs temporary log-in of the account of the installation-free application only in the case of non-virtual Bluetooth key-based encrypted communication connection, while in the case of virtual Bluetooth key-based encrypted communication connection, the in-vehicle electronic device 150 performs persistent log-in of the account of the installation-free application.

Alternatively or additionally, in some implementations, the method 200 may further include the following. A message indicating the end of a trip of a predetermined travel service is received. In response to reception of the message indicating the end of the trip of the predetermined travel service, log out a current account of the at least one installation-free application. For example, the message indicating the end of the trip of the predetermined travel service may be received from a server which is implemented with a travel service platform or implemented as a part of the travel service platform. The predetermined travel service may be, for example, taxi ride, car rental, carpooling, and so on. For example, the in-vehicle electronic device receives a message indicating the end of the taxi ride, and then logs out the current account of the at least one installation-free application. As such, the user's current account of the installation-free application may be logged out in time after the end of the trip of the travel service, which avoids leakage or publication of the user's current account and related contents, such that account and privacy security can be protected.

Alternatively or additionally, in some implementations, the method 200 may further include the following. A log-out instruction is received from the electronic device, where the log-out instruction is used to instruct to log out the current account of the at least one installation-free application. In response to reception of the log-out instruction, log out the current account of the at least one installation-free application. As such, the current account of the installation-free application may be logged out in time after the reception of the log-out instruction, which avoids leakage or publication of the current account and related contents, such that account and privacy security can be protected.

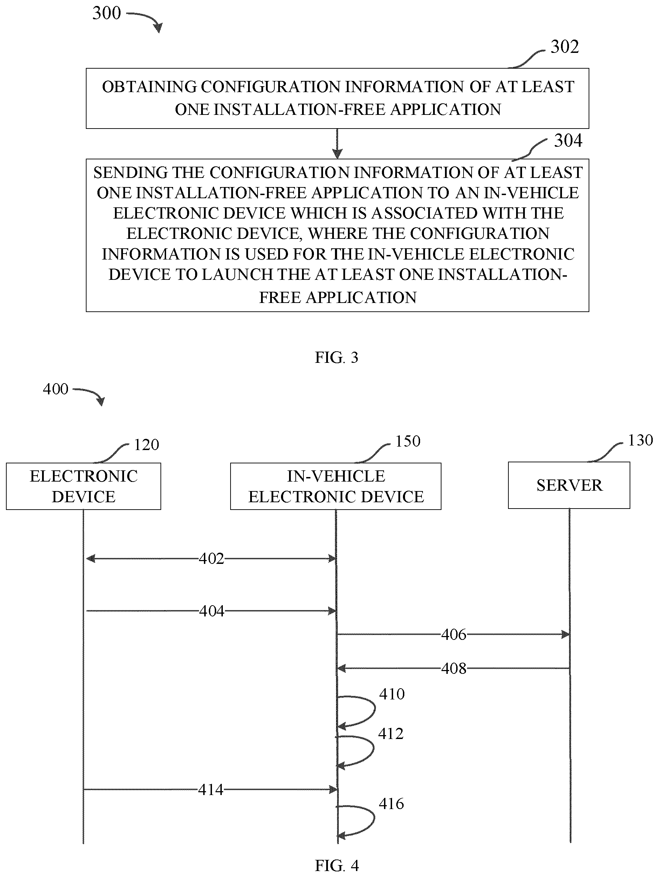

In the following, operations performed by the electronic device 120 are described in detail in conjunction with FIG.3.

FIG. 3 is a schematic flow chart illustrating a method 300 for information processing according to implementations of the disclosure. For example, the method 300 may be performed by the electronic device 120 as shown in FIG. 1. It should be noted that the method 300 may further include additional blocks not shown and/or may omit blocks shown, and the disclosure is not limited thereto.

At block 302, configuration information of the at least one installation-free application is obtained at the electronic device 120. In some implementations, if a user instruction is received, the configuration information of the at least one installation-free application is obtained. The user instruction may be generated by, for example, a predetermined mode of motion of the electronic device, interaction of a display interface, a voice command, a button, and the like. For example, the predetermined mode of motion may be a shake or a predetermined path (or trajectory, route).

In some implementations, the configuration information of the at least one installation-free application may be configuration information of an installation-free application which is presented in the foreground.

Alternatively or in addition to the installation-free application presented in the foreground, the configuration information of the at least one installation-free application may be configuration information of at least one installation-free application which is hidden in the background. As an example, installation-free application A is presented in the foreground, and installation-free applications B and C are hidden in the background. In this case, configuration information of installation-free applications A, B, and C are obtained. As another example, no installation-free application is presented in the foreground, and installation-free applications B and C are hidden in the background. In this case, configuration information of installation-free applications B and C are obtained. It should be noted that the number of the installation-free applications hidden in the background is illustrated exemplarily as two, which may also be one or more than two. The disclosure is not limited thereto.

Alternatively or in addition to the installation-free application presented in the foreground, the configuration information of the at least one installation-free application may be configuration information of at least one installation-free application which is hidden in the background. As an example, installation-free application A is presented in the foreground, and installation-free applications B and C are hidden in the background. In this case, configuration information of installation-free applications A, B, and C are obtained. As another example, no installation-free application is presented in the foreground, and installation-free applications B and C are hidden in the background. In this case, configuration information of installation-free applications B and C are obtained. It should be noted that the number of the installation-free application hidden in the background is illustrated exemplarily as two, which may also be one or more than two. The disclosure is not limited thereto.

It is to be noted that the installation-free application hidden in the background may include an installation-free application running in the background. Generally, in order to save system resources, the installation-free application will stop running when switched to the background, and will be running when switched back to the foreground. However, some kinds of installation-free applications, such as music applications, motion applications, or the like, may need to keep running when switched to the background. Therefore, to meet such requirements, background running is enabled. For example, installation-free applications A, B, and C are hidden in the background, where installation-free applications A and B stop running in the background and installation-free application C keeps running in the background. The installation-free application C may be a music installation-free application for example. It should be noted that the number of the installation-free applications is illustrated as an example. There may be more than or less than three installation-free applications hidden in the background, more than or less than two installation-free applications that stop running in the background, and more than one installation-free applications that keep running in the background. The disclosure is not limited thereto.

For example, the at least one installation-free application may include a predetermined type of at least one installation-free application. The predetermined type may include, for example, entertainment, information, instant messaging, and the like.

At block 304, configuration information of the at least one installation-free application is sent to the in-vehicle electronic device 150 which is associated with the electronic device 120. The configuration information is used for the in-vehicle electronic device 150 to launch the at least one installation-free application.

Examples for the configuration information and launching the installation-free application based on the configuration information are described above, which will not be repeated herein.

In this way, automatic synchronization of installation-free applications between the in-vehicle electronic device 150 and the electronic device 120 may be achieved, which is more convenient and intelligent.

In some implementations, the configuration information of the at least one installation-free application may be obtained as follows. Whether a predetermined type of communication connection between the electronic device and the in-vehicle electronic device is established is detected. If it is detected that the predetermined type of communication connection between the electronic device and the in-vehicle electronic device is established, the configuration information of the at least one installation-free application is obtained. For example, the predetermined type of the communication connection may include any of a Bluetooth communication connection, a Wi-Fi communication connection, an NFC communication connection, or a USB communication connection. As an example, when a user uses an electronic device with NFC communication ability to touch a vehicle that also has NFC communication ability, an NFC communication connection may be established between the electronic device and the in-vehicle electronic device. After that, the electronic device may obtain the configuration information of the installation-free application and send the configuration information of the installation-free application to the in-vehicle electronic device. As another example, an electronic device with Wi-Fi ability may search for a Wi-Fi hotspot of a vehicle, and the user may enter a Wi-Fi password to establish a Wi-Fi communication connection between the electronic device and the in-vehicle electronic device. Afterwards, the electronic device may obtain the configuration information of the installation-free application and send the configuration information of the installation-free application to the in-vehicle electronic device. As such, when it is detected that the predetermined type of communication connection is established, the installation-free application may be automatically synchronized from the electronic device to the in-vehicle electronic device, which enhances a level of intelligence and improves user experience.

Alternatively or additionally, in some implementations, the configuration information of the at least one installation-free application may be obtained as follows. A message indicating the start of a trip of a predetermined travel service is received. In response to reception of the message indicating the start of the trip of the predetermined travel service, the configuration information of the at least one installation-free application is obtained. For example, the message indicating the start of the trip of the predetermined travel service may be received from a server which is implemented with a travel service platform or implemented as a part of the travel service platform. The predetermined travel service may be, for example, taxi ride, car rental, carpooling, and so on. For example, the electronic device receives a message indicating the start of the taxi ride, and then obtains the configuration information of the at least one installation-free application and sent the configuration information of the at least one installation-free application to the in-vehicle electronic device. As such, the configuration information of the installation-free application may be automatically synchronized from the electronic device to the in-vehicle electronic device after the start of the trip, which enhances a level of intelligence and improves user experience.

In some implementations, the method 300 may further include the following. Account information of the at least one installation-free application is obtained. The account information of the at least one installation-free application is sent to the in-vehicle electronic device 150 to allow the in-vehicle electronic device to log into the at least one installation-free application. By delivering the account information of the installation-free application, the in-vehicle electronic device 150 is able to use the same account as the electronic device to log into the same installation-free application, such that the application account can be synchronized between the in-vehicle electronic device 150 and the electronic device120.

Alternatively or additionally, in some implementations, the account information of the at least one installation-free application may be sent to the in-vehicle electronic device 150 via a virtual Bluetooth key-based encrypted communication connection. The virtual Bluetooth key-based encrypted communication connection is described above, which will not be repeated herein. As such, it can be ensured that the account information of the application is synchronized from the electronic device 120 having a virtual Bluetooth key of the vehicle, and the security of the account information of the installation-free application synchronized between the electronic device 120 and the in-vehicle electronic device 150 can be guaranteed.

Alternatively or additionally, in some implementations, the configuration information of the at least one installation-free application may be sent via a communication connection which is different from the virtual Bluetooth key-based encrypted communication connection. For example, in a case that the account information is sent via the virtual Bluetooth key-based encrypted communication connection, the configuration information of the installation-free application may be sent via a USB connection or a Wi-Fi connection. As such, the configuration information and the account information can be sent via different communication connections, that is, the configuration information can be sent via a faster communication connection, and the account information can be sent via the virtual Bluetooth key-based encrypted communication connection which is safer. In this way, both speedability and security for synchronization of the installation-free application between the electronic device 120 and the in-vehicle electronic device 150 can be considered and balanced.

Alternatively or additionally, in some implementations, the configuration information of the at least one installation-free application may be sent via a communication connection which is the same as the virtual Bluetooth key-based encrypted communication connection. For example, in a case that the account information is sent via the virtual Bluetooth key-based encrypted communication connection, the configuration information of the installation-free application may also be sent via the virtual Bluetooth key-based encrypted communication connection. As such, the configuration information and the account information of the installation-free application may be delivered via the virtual Bluetooth key-based encrypted communication connection which is safer, such that the security for synchronization of the installation-free application between the electronic device 120 and the in-vehicle electronic device 150 can be fully guaranteed.

Alternatively or additionally, in some implementations, the method 300 may further include the following. A message indicating the end of a trip of a predetermined travel service is received. In response to reception of the message indicating the end of the trip of the predetermined travel service, a log-out instruction is sent to the in-vehicle electronic device. The log-out instruction is used to instruct to log out a current account of the at least one installation-free application. For example, the message indicating the end of the trip of the predetermined travel service may be received from a predetermined travel service platform. As such, the instruction to log out the user's current account of the installation-free application may be sent to the in-vehicle electronic device in time after the end of the trip of the travel service, which avoids leakage or publication of the user's current account and related contents, such that account and privacy security can be protected.

FIG. 4 is a schematic flow chart illustrating a method 400 for information processing according to implementations of the disclosure. It should be noted that the method 400 may further include additional steps not shown and/or may omit steps shown. The disclosure is not limited thereto.

At 402, a virtual Bluetooth key-based encrypted communication connection is established between the in-vehicle electronic device 150 and the electronic device 120 which is associated with the in-vehicle electronic device 150. In some implementations, the electronic device 120 stores a virtual Bluetooth key. The virtual Bluetooth key may include a connection key, an access key, permission, a validity period, and the like. The electronic device 120 may send the connection key to a Bluetooth communication module of the vehicle 110, such as an LBE device in T-BOX, to proceed with authentication. After the authentication succeeds, the in-vehicle electronic device 150 may send a random code to the electronic device 120. The subsequent communication between the in-vehicle electronic device 150 and the electronic device 120 may be encrypted by the access key in combination with the random code.

At 404, configuration information of at least one installation-free application is sent from electronic device 120 to the in-vehicle electronic device 150 via the virtual Bluetooth key-based encrypted communication connection.

At 406, based on the configuration information of the at least one installation-free application, the in-vehicle electronic device 150 sends to the sever 130 a download request for an application package of the at least one installation-free application.

At 408, the server 130 sends the application package of the at least one installation-free application.

At 410, at the in-vehicle electronic device 150, information of a launch page of the at least one installation-free application is extracted from the application package of the at least one installation-free application.

At 412, at the in-vehicle electronic device 150, the at least one installation-free application is launched based on the information of the launch page of the at least one installation-free application.

Examples for the configuration information and launching the installation-free application based on the configuration information are described above, which will not be repeated herein.

At 414, account information of the at least one installation-free application is sent from the electronic device 120 to the in-vehicle electronic device 150 via the virtual Bluetooth key-based encrypted communication connection.

At 416, based on the account information of the at least one installation-free application, the in-vehicle electronic device 150 logs into the at least one installation-free application.

As such, synchronization of the installation-free application between the in-vehicle electronic device 150 and the electronic device 120 can be achieved via the virtual Bluetooth key-based encrypted communication connection, which can ensure that the application information is synchronized from the electronic device 120 having a virtual Bluetooth key of the vehicle and guarantee the security of the application information (in particular the application account information) synchronized between the in-vehicle electronic device 150 and the electronic device 120.

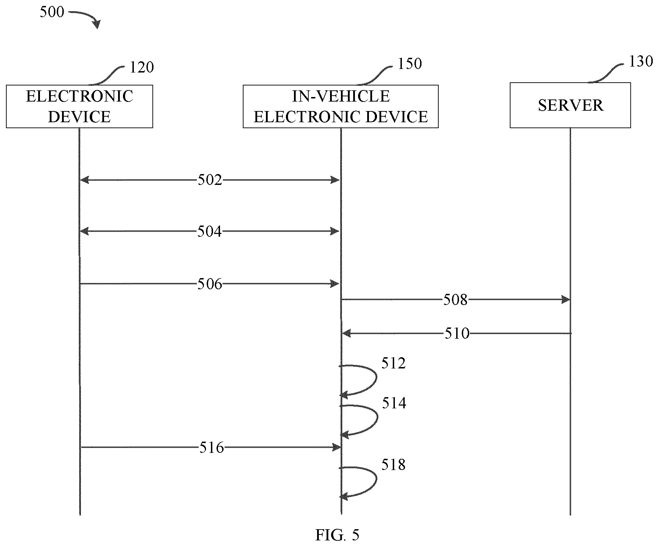

FIG. 5 is a schematic flow chart illustrating a method 500 for information processing according to implementations of the disclosure. It should be noted that the method 500 may further include additional steps not shown and/or may omit steps shown, and the disclosure is not limited thereto.

At 502, a virtual Bluetooth key-based encrypted communication connection is established between the in-vehicle electronic device 150 and the electronic device 120 which is associated with the in-vehicle electronic device 150. The establishment process of the virtual Bluetooth key-based encrypted communication connection is described above, which will not be repeated herein.

At 504, a USB communication connection is established between the electronic device 120 and the in-vehicle electronic device 150. For example, a USB interface of the electronic device 120 is connected to a USB interface of the in-vehicle electronic device 150, so as to establish the USB communication connection between the electronic device 120 and the in-vehicle electronic device 150. It should be noted that the USB communication connection is illustrated as an example, which may also be other non-virtual Bluetooth key-based communication connections, such as a Wi-Fi connections, a zigbee connection, a cellular communication connection, and the like.

At 506, configuration information of at least one installation-free application is sent from electronic device 120 to the in-vehicle electronic device 150 via the USB communication connection.

At 508, based on the configuration information of at least one installation-free application, the in-vehicle electronic device 150 sends to the sever 130 a download request for an application package of the at least one installation-free application.

At 510, the server 130 sends the application package of the at least one installation-free application.

At 512, at the in-vehicle electronic device 150, information of a launch page of the at least one installation-free application is extracted from the application package of the at least one installation-free application.

At 514, at the in-vehicle electronic device 150, the at least one installation-free application is launched based on the information of the launch page of the at least one installation-free application.

Examples for the configuration information and launching the installation-free application based on the configuration information are described above, which will not be repeated herein.

At 516, account information of the at least one installation-free application is sent from the electronic device 120 to the in-vehicle electronic device 150 via the virtual Bluetooth key-based encrypted communication connection.

At 518, based on the account information of the at least one installation-free application, the in-vehicle electronic device 150 logs into the at least one installation-free application.

As such, the configuration information and the account information can be sent via different communication connections, that is, the configuration information can be sent via a faster communication connection, and the account information can be sent via the virtual Bluetooth key-based encrypted communication connection which is safer. In this way, both speed and security for synchronization of the installation-free application between the electronic device 120 and the in-vehicle electronic device 150 can be considered.

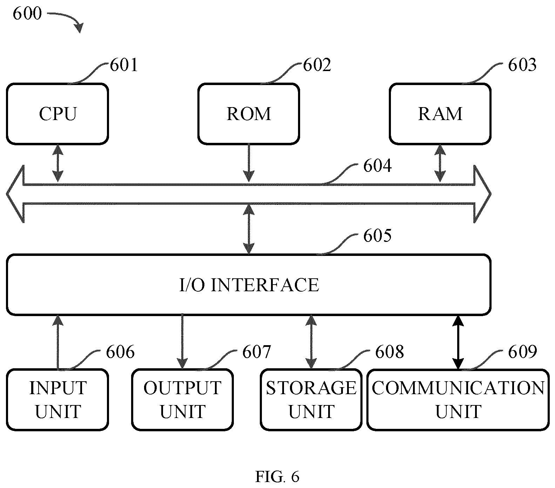

FIG. 6 is a schematic block diagram illustrating an example device 600 which can be used to implement the implementations of disclosure. For example, the electronic device 110 and the in-vehicle electronic device 150 shown in FIG. 1 may be implemented by the device 600. As shown in the figure, the device 600 includes a central processing unit (CPU) 610, which can perform various appropriate actions and processing according to computer program instructions which are stored in a read-only memory (ROM) 620 or loaded from a storage unit 680 to a random access memory (RAM) 630. In the RAM 630, various programs and data required for the operation of the device 600 can also be stored. The CPU 610, the ROM 620, and the RAM 630 are connected with each other through a bus 640. An input/output (I/O) interface 650 is also connected with the bus 640.

Multiple components in the device 600 are connected to the I/O interface 650, these components including: an input unit 660, such as a keyboard, a mouse, etc.; an output unit 670, such as various types of displays, speakers, etc.; a storage unit 680, such as a magnetic disk, an optical disk, etc.; and a communication unit 690, such as a network card, a modem, a wireless communication transceiver, etc. The communication unit 690 allows the device 600 to exchange information/data with other devices through a computer network such as the Internet and/or various telecommunication networks.

The various procedures and processing described above, such as the methods 200, 300, 400, and 500, may be executed by the processing unit 610. For example, in some implementations, the methods 200, 300, 400, and 500 may be implemented as computer software programs, which are tangibly contained in a machine-readable medium, such as the storage unit 680. In some implementations, part or all of the computer programs may be loaded and/or installed on the device 600 via the ROM 620 and/or the communication unit 690. When the computer programs are loaded into the RAM 630 and executed by the CPU 610, one or more actions of the methods 200, 300, 400, and 500 described above may be executed.

The present disclosure may be a method, device, system, and/or computer program product. The computer program product may include a computer-readable storage medium storing computer-readable program instructions for executing various aspects of the present disclosure.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein may be downloaded to respective computing/processing devices from a computer readable storage medium or to an external computer or external storage device via a network, for example, the Internet, a local area network, a wide area network and/or a wireless network. The network may include copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create module for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A method for information processing, comprising:
receiving (202), at an in-vehicle electronic device (150), configuration information of at least one installation-free application from an electronic device (120) which is communicated with the in-vehicle electronic device (150) via a direct communication connection between the in-vehicle electronic device (150) and the electronic device (120), wherein the configuration information comprises a jump address for downloading an application package of the at least one installation-free application, or an application package name of the at least one installation-free application to obtain the jump address, or an application profile of the at least one installation-free application to obtain the application package name;
obtaining (204) information of a launch page of the at least one installation-free application based on the configuration information of the at least one installation-free application, wherein the information of the launch page is extracted from the application package after the application package of the at least one installation-free application has been downloaded, wherein the information of the launch page of the at least one installation-free application comprises at least one of profiles, resources, and codes of the launch page; and
launching (206) the at least one installation-free application by rendering and presenting a page of the at least one installation-free application according to the information of the launch page.

2. The method of claim 1, wherein the configuration information comprises a jump address or a web cache of a current page, the web cache is generated by pre-rendering the current page;
wherein launching the at least one installation-free application comprises:
launching the current page of the at least one installation-free application based on the jump address or the web cache of the current page.

3. The method of claim 1, wherein the configuration information comprises an icon, launching the at least one installation-free application comprises:
generating, at a desktop of an operating system of the in-vehicle electronic device (150), the icon of the at least one installation-free application.

4. The method of claim 1, further comprising:
receiving account information of the at least one installation-free application from the electronic device (120); and
logging into the at least one installation-free application based on the account information of the at least one installation-free application.

5. The method of claim 4, further comprising:
receiving a message indicating the end of a trip of a predetermined travel service; and
logging out a current account of the at least one installation-free application in response to reception of the message indicating the end of the trip of the predetermined travel service.

6. The method of claim 4, further comprising:
receiving a log-out instruction from the electronic device (120), wherein the log-out instruction is used to instruct to log out a current account of the at least one installation-free application; and
logging out the current account of the at least one installation-free application in response to reception of the log-out instruction.

7. The method of claim 4, further comprising:
determining whether a communication connection between the in-vehicle electronic device (150) and the electronic device (120) is disconnected; and
logging out a current account of the at least one installation-free application based on a determination that the communication connection between the in-vehicle electronic device (150) and the electronic device (120) is disconnected.

8. The method of claim 7, wherein logging out the current account of the at least one installation-free application comprises:
determining whether the communication connection is a virtual Bluetooth key-based encrypted communication connection; and
logging out the current account of the at least one installation-free application based on a determination that the communication connection is not the virtual Bluetooth key-based encrypted communication connection.

9. The method of claim 4, wherein the account information of the at least one installation-free application is received via a communication connection comprising a virtual Bluetooth key-based encrypted communication connection.

10. The method of claim 9, wherein the configuration information of the at least one installation-free application is received via a communication connection which is the same as or different from the virtual Bluetooth key-based encrypted communication connection.

11. The method of claim 1, wherein the configuration information comprises one of:
an application jump address, an application package name, or an application profile.

12. A method for information processing, comprising:
obtaining (302), at an electronic device (120), configuration information of at least one installation-free application, wherein the configuration information comprises a jump address for downloading an application package of the at least one installation-free application, or an application package name of the at least one installation-free application to obtain the jump address, or an application profile of the at least one installation-free application to obtain the application package name; and
sending (304) the configuration information of at least one installation-free application to an in-vehicle electronic device (150) which is communicated with the electronic device (120) via a direct communication connection between the in-vehicle electronic device (150) and the electronic device (120), wherein the configuration information is used for the in-vehicle electronic device (150) to launch the at least one installation-free application, wherein the configuration information is processed by an in-vehicle device (150) according to the method of claim 1.

13. The method of claim 12, wherein the configuration information comprises a jump address or a web cache of a current page to allow the in-vehicle electronic device (150) to launch the current page of the at least one installation-free application, wherein the web cache is generated by pre-rendering the current page.

14. An in-vehicle electronic device (150), comprising:
at least one processing unit; and
at least one memory coupled with the at least one processing unit and storing instructions configured to be executed by the at least one processing unit, wherein when executed by the at least one processing unit, the instructions cause the in-electronic device (150) to perform the method of any of claims 1 to 11.

15. An electronic device (120), comprising:
at least one processing unit; and
at least one memory coupled with the at least one processing unit and storing instructions configured to be executed by the at least one processing unit, wherein when executed by the at least one processing unit, the instructions cause the electronic device (120) to perform the method of any of claims 12 to 13.

## Patentansprüche

1. Verfahren zur Informationsverarbeitung, umfassend:
Empfangen (202) von Konfigurationsinformationen mindestens einer installationsfreien Anwendung an einem fahrzeuginternen elektronischen Gerät (150) von einem elektronischen Gerät (120), welche mit dem fahrzeuginternen elektronischen Gerät (150) über eine direkte Kommunikationsverbindung zwischen dem fahrzeuginternen elektronischen Gerät (150) und dem elektronischen Gerät (120) kommuniziert werden, wobei die Konfigurationsinformationen eine Sprungadresse zum Herunterladen eines Anwendungspakets der mindestens einen installationsfreien Anwendung oder einen Anwendungspaketnamen der mindestens einen installationsfreien Anwendung zum Ermitteln der Sprungadresse oder ein Anwendungsprofil der mindestens einen installationsfreien Anwendung zum Ermitteln des Anwendungspaketnamens umfassen;
Abrufen (204) von Informationen einer Startseite der mindestens einen installationsfreien Anwendung auf Grundlage der Konfigurationsinformationen der mindestens einen installationsfreien Anwendung, wobei die Informationen der Startseite aus dem Anwendungspaket extrahiert werden, nachdem das Anwendungspaket der mindestens einen installationsfreien Anwendung heruntergeladen wurde, wobei die Informationen der Startseite der mindestens einen installationsfreien Anwendung mindestens eines der folgenden Elemente umfassen: Profile, Ressourcen und Codes der Startseite; und
Starten (206) der mindestens einen installationsfreien Anwendung durch Rendern und Anzeigen einer Seite der mindestens einen installationsfreien Anwendung gemäß den Informationen der Startseite.

2. Verfahren nach Anspruch 1, wobei die Konfigurationsinformationen eine Sprungadresse oder einen Web-Cache einer aktuellen Seite umfassen, wobei der Web-Cache durch Vorab-Rendering der aktuellen Seite erzeugt wird; wobei das Starten der mindestens einen installationsfreien Anwendung umfasst:
Starten der aktuellen Seite der mindestens einen installationsfreien Anwendung auf der Grundlage der Sprungadresse oder des Web-Caches der aktuellen Seite.

3. Verfahren nach Anspruch 1, wobei die Konfigurationsinformationen ein Symbol umfassen, wobei das Starten der mindestens einen installationsfreien Anwendung umfasst:
Erzeugen des Symbols der mindestens einen installationsfreien Anwendung auf einem Desktop eines Betriebssystems des fahrzeuginternen elektronischen Geräts (150).

4. Verfahren nach Anspruch 1, ferner umfassend:
Empfangen von Kontoinformationen der mindestens einen installationsfreien Anwendung von dem elektronischen Gerät (120); und
Anmelden bei der mindestens einen installationsfreien Anwendung auf Grundlage der Kontoinformationen der mindestens einen installationsfreien Anwendung.

5. Verfahren nach Anspruch 4, ferner umfassend:
Empfangen einer Nachricht, die das Ende einer Fahrt eines vorbestimmten Reisedienstes anzeigt; und
Abmelden eines aktuellen Kontos der mindestens einen installationsfreien Anwendung als Reaktion auf den Empfang der Nachricht, die das Ende der Fahrt des vorbestimmten Reisedienstes anzeigt.

6. Verfahren nach Anspruch 4, ferner umfassend:
Empfangen einer Abmeldeanweisung von dem elektronischen Gerät (120), wobei die Abmeldeanweisung dazu dient, die Abmeldung eines aktuellen Kontos der mindestens einen installationsfreien Anwendung anzuweisen; und
Abmelden des aktuellen Kontos der mindestens einen installationsfreien Anwendung als Reaktion auf den Empfang der Abmeldeanweisung.

7. Verfahren nach Anspruch 4, ferner umfassend:
Feststellen, ob eine Kommunikationsverbindung zwischen dem fahrzeuginternen elektronischen Gerät (150) und dem elektronischen Gerät (120) unterbrochen ist; und
Abmelden eines aktuellen Kontos der mindestens einen installationsfreien Anwendung auf der Grundlage einer Feststellung, dass die Kommunikationsverbindung zwischen dem fahrzeuginternen elektronischen Gerät (150) und dem elektronischen Gerät (120) unterbrochen ist.

8. Verfahren nach Anspruch 7, wobei das Abmelden des aktuellen Kontos der mindestens einen installationsfreien Anwendung umfasst:
Feststellen, ob es sich bei der Kommunikationsverbindung um eine auf einem virtuellen Bluetooth-Schlüssel basierende verschlüsselte Kommunikationsverbindung handelt; und
Abmelden des aktuellen Kontos der mindestens einen installationsfreien Anwendung auf der Grundlage einer Feststellung, dass es sich bei der Kommunikationsverbindung nicht um die auf einem virtuellen Bluetooth-Schlüssel basierende verschlüsselte Kommunikationsverbindung handelt.

9. Verfahren nach Anspruch 4, wobei die Kontoinformationen der mindestens einen installationsfreien Anwendung über eine Kommunikationsverbindung empfangen werden, die eine auf einem virtuellen Bluetooth-Schlüssel basierende verschlüsselte Kommunikationsverbindung umfasst.

10. Verfahren nach Anspruch 9, wobei die Konfigurationsinformationen der mindestens einen installationsfreien Anwendung über eine Kommunikationsverbindung empfangen werden, die mit der verschlüsselten Kommunikationsverbindung auf Basis eines virtuellen Bluetooth-Schlüssels identisch ist oder sich von dieser unterscheidet.

11. Verfahren nach Anspruch 1, wobei die Konfigurationsinformationen eines der folgenden Elemente umfassen:
eine Anwendungssprungadresse, einen Anwendungspaketnamen oder ein Anwendungsprofil.

12. Verfahren zur Informationsverarbeitung, umfassend:
Ermitteln (302) von Konfigurationsinformationen mindestens einer installationsfreien Anwendung auf einem elektronischen Gerät (120), wobei die Konfigurationsinformationen eine Sprungadresse zum Herunterladen eines Anwendungspakets der mindestens einen installationsfreien Anwendung oder einen Anwendungspaketnamen der mindestens einen installationsfreien Anwendung zum Ermitteln der Sprungadresse, oder ein Anwendungsprofil der mindestens einen installationsfreien Anwendung, um den Anwendungspaketnamen zu erhalten; und
Senden (304) der Konfigurationsinformationen der mindestens einen installationsfreien Anwendung an ein fahrzeuginternes elektronisches Gerät (150), welche über eine direkten Kommunikationsverbindung zwischen dem fahrzeuginternen elektronischen Gerät (150) und dem elektronischen Gerät (120) kommuniziert werden, wobei die Konfigurationsinformationen dazu verwendet werden, dass das fahrzeuginterne elektronische Gerät (150) die mindestens eine installationsfreie Anwendung startet, wobei die Konfigurationsinformationen von einem fahrzeuginternen Gerät (150) gemäß dem Verfahren nach Anspruch 1 verarbeitet werden.

13. Verfahren nach Anspruch 12, wobei die Konfigurationsinformationen eine Sprungadresse oder einen Web-Cache einer aktuellen Seite umfassen, damit das fahrzeuginterne elektronische Gerät (150) die aktuelle Seite der mindestens einen installationsfreien Anwendung starten kann, wobei der Web-Cache durch vorheriges Rendern der aktuellen Seite erzeugt wird.

14. Fahrzeuginternes elektronisches Gerät (150), umfassend:
mindestens eine Verarbeitungseinheit; und
mindestens einen Speicher, der mit der mindestens einen Verarbeitungseinheit gekoppelt ist und Befehle speichert, die so konfiguriert sind, dass sie von der mindestens einen Verarbeitungseinheit ausgeführt werden können, wobei die Befehle bei Ausführung durch die mindestens eine Verarbeitungseinheit bewirken, dass das fahrzeuginterne elektronische Gerät (150) das Verfahren gemäß einem der Ansprüche 1 bis 11 ausführt.

15. Elektronisches Gerät (120), umfassend:
mindestens eine Verarbeitungseinheit; und
mindestens einen Speicher, der mit der mindestens einen Verarbeitungseinheit gekoppelt ist und Befehle speichert, die so konfiguriert sind, dass sie von der mindestens einen Verarbeitungseinheit ausgeführt werden können, wobei die Befehle bei Ausführung durch die mindestens eine Verarbeitungseinheit bewirken, dass das elektronische Gerät (120) das Verfahren gemäß einem der Ansprüche 12 bis 13 ausführt.

## Revendications

1. Procédé de traitement d'informations, comprenant :
réception (202) d'informations de configuration d'au moins une application sans installation sur un dispositif électronique (150) embarqué dans un véhicule, à partir d'un dispositif électronique (120) qui communique avec le dispositif électronique (150) embarqué dans le véhicule via une connexion de communication directe entre le dispositif électronique (150) embarqué dans le véhicule et le dispositif électronique (120), les informations de configuration comprenant une adresse de saut permettant de télécharger un paquet d'application de ladite au moins une application sans installation, ou un nom de paquet d'application de ladite au moins une application sans installation permettant de déterminer ladite adresse de saut, ou un profil d'application de ladite au moins une application sans installation permettant d'obtenir ledit nom du paquet d'application;
obtention (204) d'informations d'une page d'accueil de ladite au moins une application sans installation sur la base des informations de configuration de ladite au moins une application sans installation, les informations de la page d'accueil étant extraites du paquet d'application après un téléchargement du paquet d'application de ladite au moins une application sans installation, les informations de la page d'accueil de ladite au moins une application sans installation comprenant au moins l'un des éléments suivants: des profils, des ressources et des codes de la page d'accueil ; et
lancement (206) de ladite au moins une application sans installation en rendant et en présentant une page de ladite au moins une application sans installation conformément aux informations de la page d'accueil.

2. Procédé selon la revendication 1, dans lequel les informations de configuration comprennent une adresse de saut ou un cache web d'une page actuelle, le cache web étant généré en pré-rendant la page actuelle ; dans lequel le lancement de ladite au moins une application sans installation comprend :
lancement de la page actuelle de ladite au moins une application sans installation sur la base de l'adresse de saut ou du cache web de la page actuelle.

3. Procédé selon la revendication 1, dans lequel les informations de configuration comprennent une icône, le lancement de ladite au moins une application sans installation comprenant :
création de l'icône de ladite au moins une application sans installation sur un bureau d'un système d'exploitation du dispositif électronique (150) embarqué dans le véhicule.

4. Procédé selon la revendication 1, comprenant en outre :
réception d'informations de compte de ladite au moins une application sans installation provenant du dispositif électronique (120) ; et
connexion à ladite au moins une application sans installation sur la base des informations de compte de ladite au moins une application sans installation.

5. Procédé selon la revendication 4, comprenant en outre :
réception d'un message indiquant la fin d'un trajet d'un service de transport prédéterminé ; et
déconnexion d'un compte actuel de ladite au moins une application sans installation en réponse à la réception du message indiquant la fin du trajet dudit service de transport prédéterminé.

6. Procédé selon la revendication 4, comprenant en outre:
réception d'une instruction de déconnexion provenant du dispositif électronique (120), ladite instruction de déconnexion est utilisée pour ordonner une déconnexion d'un compte actuel de ladite au moins une application sans installation; et
déconnexion du compte actuel de ladite au moins une application sans installation en réponse à la réception de l'instruction de déconnexion.

7. Procédé selon la revendication 4, comprenant en outre:
détermination si une connexion de communication entre le dispositif électronique (150) embarqué dans le véhicule et le dispositif électronique (120) est interrompue; et
déconnexion d'un compte actuel de ladite au moins une application sans installation sur la base d'une détermination selon laquelle la connexion de communication entre le dispositif électronique (150) embarqué dans le véhicule et le dispositif électronique (120) est interrompue.

8. Procédé selon la revendication 7, dans lequel la déconnexion du compte actuel de ladite au moins une application sans installation comprend:
détermination si la connexion de communication est une connexion de communication chiffrée basée sur une clé Bluetooth virtuelle; et
déconnexion du compte actuel de ladite au moins une application sans installation sur la base d'une détermination selon laquelle la connexion de communication n'est pas la connexion de communication chiffrée basée sur la clé Bluetooth virtuelle.

9. Procédé selon la revendication 4, dans lequel les informations de compte de ladite au moins une application sans installation sont reçues via une connexion de communication comprenant une connexion de communication chiffrée basée sur une clé Bluetooth virtuelle.

10. Procédé selon la revendication 9, dans lequel les informations de configuration de ladite au moins une application sans installation sont reçues via une connexion de communication qui est identique à la ou différente de la connexion de communication chiffrée basée sur la clé Bluetooth virtuelle.

11. Procédé selon la revendication 1, dans lequel les informations de configuration comprennent l'un des éléments suivants:
une adresse de saut d'application, un nom de paquet d'application ou un profil d'application.

12. Procédé de traitement de l'information, comprenant :
obtention (302) d'informations de configuration d'au moins une application sans installation sur un dispositif électronique (120), lesdites informations de configuration comprenant une adresse de saut permettant de télécharger un paquet d'application de ladite au moins une application sans installation, ou un nom de paquet d'application de ladite au moins une application sans installation permettant de déterminer ladite adresse de saut, ou un profil d'application de ladite au moins une application sans installation permettant d'obtenir ledit nom du paquet d'application; et
envoi (304) des informations de configuration de ladite au moins une application sans installation à un dispositif électronique (150) embarqué dans un véhicule, qui est connecté via une connexion de communication directe entre le dispositif électronique (150) embarqué dans le véhicule et le dispositif électronique (120), les informations de configuration étant utilisées pour que le dispositif électronique (150) embarqué dans le véhicule lance ladite au moins une application sans installation, les informations de configuration étant traitées par un dispositif électronique (150) embarqué dans le véhicule conformément au procédé selon la revendication 1.

13. Procédé selon la revendication 12, dans lequel les informations de configuration comprennent une adresse de saut ou un cache web d'une page actuelle, afin de permettre au dispositif électronique (150) embarqué dans le véhicule de lancer la page actuelle de ladite au moins une application sans installation, le cache web étant généré en pré-rendant la page actuelle.

14. Dispositif électronique (150) embarqué dans un véhicule, comprenant:
au moins une unité de traitement; et
au moins une mémoire couplée à ladite au moins une unité de traitement et stockant des instructions configurées pour être exécutées par ladite au moins une unité de traitement, dans lequel, lorsqu'elles sont exécutées par ladite au moins une unité de traitement, les instructions amènent le dispositif électronique (150) embarqué dans le véhicule à mettre en œuvre le procédé selon l'une quelconque des revendications 1 à 11.

15. Dispositif électronique (120), comprenant:
au moins une unité de traitement; et
au moins une mémoire couplée à ladite au moins une unité de traitement et stockant des instructions configurées pour être exécutées par ladite au moins une unité de traitement, dans lequel, lorsqu'elles sont exécutées par ladite au moins une unité de traitement, les instructions amènent le dispositif électronique (120) à mettre en œuvre le procédé selon l'une quelconque des revendications 12 à 13.
